# EUROPEAN PATENT SPECIFICATION

(11) **EP 1 662 840 B1**
(45) Date of publication and mention of the grant of the patent: **01.10.2014**
(21) Application number: 04771861.4
(22) Date of filing: 19.08.2004
(51) Int. Cl.: H04R 17/00

(54) **SOUND MATCHING BODY, PROCESS FOR PRODUCING THE SAME, ULTRASONIC SENSOR AND ULTRASONIC WAVE TRANSMITTING/RECEIVING SYSTEM**
SCHALLVERGLEICHSKÖRPER, PROZESS ZU SEINER HERSTELLUNG, ULTRASCHALLSENSOR UND ULTRASCHALLWELLEN-SENDE-/ EMPFANGSSYSTEM
CORPS D'ADAPTATION SONORE, PROCEDE DE PRODUCTION DUDIT CORPS, CAPTEUR ULTRASONORE ET SYSTEME D'EMISSION/RECEPTION D'ONDES ULTRASONORES

(30) Priority: 22.08.2003 JP 2003298451; 02.02.2004 JP 2004025202; 02.02.2004 JP 2004025203
(43) Date of publication of application: 31.05.2006
(73) Proprietor: Panasonic Corporation, Kadoma-shi Osaka 571-8501 (JP)
(72) Inventor: BESSYO, Daisuke c/o Panasonic Corporation, Osaka 540-6207 (JP); OHJI, Kenzo c/o Panasonic Corporation, Osaka 540-6207 (JP)
(74) Representative: Eisenführ Speiser
(86) International application number: PCT/JP2004/011900
(87) International publication number: WO 2005/020631

(56) References cited:
- EP-A- 0 361 757
- EP-A- 1 170 978
- WO-A-03/064981
- WO-A1-03/064981
- JP-A- 2 177 799
- JP-A- 2001 346 294
- JP-A- 2002 051 398
- JP-A- 2002 051 398
- JP-A- 2003 333 693

## Description

### Technical Field

The present invention relates to an acoustic matching body including a ceramic porous body, particularly for efficiently transmitting an ultrasonic wave generated by a vibration means to a gas or efficiently receiving an ultrasonic wave that has been propagated through air, an ultrasonic sensor wherein the acoustic matching body is employed, and an ultrasonic transmitting/receiving system for conducting a ultrasonic transmitting/receiving signal processing with the ultrasonic sensor.

### Background Art

There has been known that an acoustic matching layer used for an ultrasonic sensor is formed from a porous material (see, for example, Japanese Patent Kokai (Laid-Open) Publication No. 6-327098(A) (Patent Literature 1).

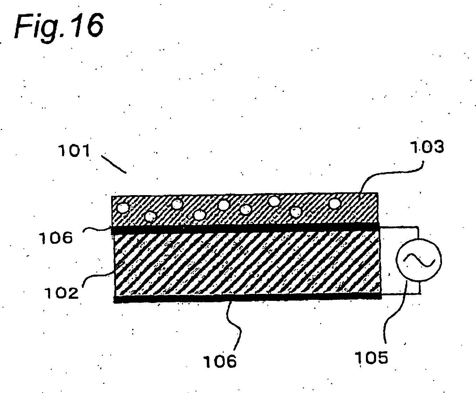

As shown in Fig. 16, an ultrasonic sensor 101 is composed of a piezoelectric material 102 (which is referred to as an oscillator) sandwiched with a pair of opposed electrodes 106 and an ultrasonic-signal generator 105 which is connected to the opposed electrodes 106.

The ultrasonic wave generated in the piezoelectric material 102 is radiated in the air through the acoustic matching layer 103. The acoustic matching layer 103 is, for example, an epoxy resin with micro hollow spheres dispersed therein, which has a sonic velocity of 1800m/s, and a density of 0.7×10³kg/cm³.

The porous materials used for the acoustic matching layer include various embodiments. One representative example of them is produced by stacking a plurality of thin films each of which is obtained by applying a thin layer of a mixture of ceramic powder and acrylic micro spheres on a film and then peeling the layer after drying, and sintering the stacked films with a electric oven by raising a temperature so that the ceramic powder is bonded. The acrylic spheres are burned out to form voids, whereby the porous material is formed. The features of the porous materials produced in this manner are that the voids are minute and that the voids are uniformly distributed (See Japanese Patent Kokai (Laid-Open) Publication No. 2002-51398(A) (Patent Literature 2)).

Another acoustic matching member has a constitution wherein a plurality of micro pieces are aggregated and bonded to each other on the contact face of each pieces (see, for example, Japanese Patent Kokai (Laid-Open) Publication No. 2001-346295(A) (Patent Literature 3)). Further, a method for producing an acoustic matching layer which employs a resin with hollow spheres mixed therein as a material for the acoustic matching layer (see Japanese Patent Kokai (Laid-Open) Publication No. 2002-58099(A) (Patent Literature 4)).

Furthermore, there is known a method for producing an acoustic matching member by a technique of heating hollow spheres and then compressing the softened material within a mold (see Japanese Patent Kokai (Laid-Open) Publication No. 2-177799(A) (Patent Literature 5)). This method gives a structure wherein the hollow spheres form a matrix and the adjacent hollow spheres are bonded to each other at the contact points of the matrix and voids exist between the hollow spheres. According to Japanese Patent Kokai (Laid-Open) Publication No. 2-177799(A), a sonic velocity of this structure is about 900m/s, and an acoustic impedance is about 4.5×10⁵ kg/m²s. A density of the matrix of this hollow sphere is calculated to be about 0.5 g/cm³ since the acoustic impedance is defined as a product of a density (p) and a sonic velocity (C) (ρ·C).

In addition, an acoustic matching layer formed from a dried gel of an inorganic oxide is also known (see, for example, Japanese Patent Kokai (Laid-Open) Publication No. 2002-262394 (A) (Patent Literature 6)). This also has a porous structure and pores with a size in the order of nanometer. The dried inorganic oxide gel is obtained as one which has a density of not greater than 0.5g/cm³ and a sonic velocity of not greater than 500m/s.

The applicant (the assignee in the United State) suggests forming the dried inorganic oxide gel as an acoustic matching layer of a composite structure (Japanese Patent Application No. 2003-136327 filed on May 14, 2003). Specifically, the acoustic matching layer of composite structure has a first layer and a second layer, wherein an acoustic impedance Z1 of the first layer and an acoustic impedance Z2 of the second layer satisfy a relationship of Z1>Z2 and the second layer is formed from the dried inorganic oxide gel. The first layer of the acoustic matching layer of this composite structure is manufactured by pressing a mixed powder of acrylic micro-spheres, SiO₂ powder, and glass frit and then removing the acrylic micro-spheres by a thermal treatment at 400°C to form voids followed by sintering it at 900°C to obtain a porous body and polishing the porous material so that it has an appropriate size, for example, a diameter of 12mm and a thickness of 0.85mm.

The aforementioned application describes that there is a utility in that the acoustic matching layer is composed of a plurality of members having different acoustic impedances, particularly different members. Further, in the aforementioned application, this is realized by forming the second acoustic matching layer by filling the first acoustic matching layer (the porous body) with a fluid inorganic oxide material which has not been gelated or dried yet, followed by solidifying the material. The aforementioned application describes that, according to this production method, delamination between the layers is difficult to occur because of a physical shape effect (an anchoring effect) since the first layer and the second layer are continued in part to be integrated.

As described above, various acoustic matching members have been proposed. Further, Japanese Patent Kokai (Laid-Open) Publication 2001-261463(A) (Patent Literature 7) discloses a method for forming a ceramic porous body by drying, degreasing and sintering a gel porous molded body which is obtained by gelation of a bubble-containing ceramic slurry including hardly sinterable ceramic powder.
Patent Literature 1:
   Japanese Patent Kokai (Laid-Open) Publication No. 6-327098(A)
Patent Literature 2:
   Japanese Patent Kokai (Laid-Open) Publication No. 2002-51398(A)
Patent Literature 3:
   Japanese Patent Kokai (Laid-Open) Publication No. 2001-346295(A)
Patent Literature 4:
   Japanese Patent Kokai (Laid-Open) Publication No. 2002-58099(A)
Patent Literature 5:
   Japanese Patent Kokai (Laid-Open) Publication No. 2-177799(A)
Patent Literature 6:
   Japanese Patent Kokai (Laid-Open) Publication No. 2002-262394(A)
Patent Literature 7:
   Japanese Patent Kokai (Laid-Open) Publication 2001-261463(A) ,

Document WO 03/064981 discloses an acoustic matching body according to the preamble of claim 1.

### Disclosure of Invention

### Problems to Be Solved by Invention

The conventional acoustic matching members are not sufficient from the viewpoint of at least one of the characteristic and ease of production. For example, in the case where the acoustic matching member is formed from a resin, the ultrasonic sensor employing the member is affected by the temperature characteristic of the resin to cause a change in amplitude and period of a waveform of an ultrasonic transmitting/received signal. Such a change due to temperature makes an ultrasonic transmitter/receiver wherein the ultrasonic sensor is employed unsuitable for measuring a gas flow rate.

The technique of stacking a plurality of films containing the ceramic powder and the acrylic spheres as suggested in Japanese Patent Kokai (Laid-Open) Publication No. 2002-51398(A) gives the acoustic matching member which has excellent uniformity as to the void size and the void distribution, but the production process is complicated. Further, waste is incurred since the acrylic spheres does not remain in the acoustic matching member obtained according to this technique. Therefore, this technique is disadvantageous in production cost.

In the acoustic matching member obtained in accordance with the method for producing a porous body by aggregating a plurality of micro-pieces, or the method for producing a porous body by bonding the hollow spheres to each other so that the hollow spheres form a matrix, the bonding at the contact points tends to be weak which results in a large propagation loss of ultrasonic wave.

The dried inorganic oxide gel has excellent characteristic suitable for the acoustic matching member. Also the acoustic matching member of a composite structure wherein this dried gel is a second layer and another porous body is a first layer has excellent characteristic. The bonding strength between the dried inorganic oxide gel and the porous body as the first layer, however, may be not sufficient for some porous body used for the first layer. Further, the production method specifically disclosed in Japanese Patent Application No. 2003-140687 is not necessarily carried out easily. For example, the member obtained by pressing the mixture of the acrylic micro-spheres, SiO₂ powder and glass flit followed by removal of the acrylic micro-spheres and sintering, is required to be polished after the sintering so that it has an appropriate size. This polishing is necessary since the size of the member obtained after the sintering is shrunk to about a third part of the size of the pressed powder and warpage is observed in the after-sintering member. The polishing operation, however, is generally complicated and needs a more time, which operation is carried out so that a principal surface of a certain member has a predetermined area and the warpage degree and the concavo-convex degree are within predetermined ranges.

Further, the dried inorganic oxide gel is not practical in that the strength thereof is small and liable to fracture. This is because, for example, an appropriate thickness of the second layer is small in the composite acoustic matching member wherein the second layer is the dried inorganic oxide gel and the first layer is another porous body. In the case where an ultrasonic whose frequency "f" is 500kHz is employed and a sonic velocity "C" in the dried gel is 500m/s, a wavelength λ of an ultrasonic wave which is propagated through the dried gel is determined by C/f, and it is 1mm.

Since the appropriate thickness of the acoustic matching member is generally a quarter of the wavelength of the ultrasonic which is propagated through the member, the appropriate thickness of the acoustic matching member formed from the dried gel is very small, 0.25mm. Further, since the appropriate thickness of the acoustic matching member depends on the sonic velocity, it is necessary, in order to obtain the appropriate acoustic matching member, to polish the second layer to adjust the thickness until a desired output is obtained while measuring the output from an ultrasonic transmitting/receiving system which is assembled using the member. In the case where the second layer is the dried gel, the edge of the second layer is liable to fracture during polishing, and therefore it is generally difficult to realize such a thickness.

The present invention is made in light of the problems of the conventional acoustic matching member. The object of the present invention is to provide an acoustic matching member which has more excellent characteristic, to provide an acoustic matching body of a composite structure which has excellent characteristic by effectively utilizing the dried inorganic oxide gel, and to provide a production method which makes it possible to produce such an acoustic matching body easily.

### Means to Solve Problems

As a result of studying for the purpose of achieving the above-described object, it has been found that the characteristic of an acoustic matching body depends on a pore diameter and a pore diameter distribution in the porous body and that favorable characteristic is effectively realized by reducing the pore diameter in the porous body and making the pore diameter distribution uniform. Further, it has been found that excellent characteristic is obtained in an acoustic matching body when employing the ceramic porous body disclosed in Japanese Patent Kokai (Laid-Open) Publication No. 2001-261436, as a porous body having a small pore diameter, a uniform pore diameter distribution and a high strength, whereby the present invention has been completed.

Further, the possibility of production and use of the dried inorganic oxide gel without fracture has been studied. Specifically, a construction for protecting the edge of the second layer has been studied by devising a shape of another porous body when making a composite of the dried inorganic oxide gel and the another porous body. As the construction for protecting the edge of the second layer, a construction has been studied wherein a concavity is formed in the another porous body and the dried inorganic oxide gel is placed within the concavity so that the edge is protected. In order to realized the construction, it is necessary to subject the another porous body to cutting work. The porous body is generally difficult to be cut and long time and much cost are required for the cutting work. The present inventors have found that when the above-mentioned specific ceramic porous body is used, the concavity can be formed by molding without the cutting work and the construction wherein the edge of the dried inorganic oxide gel is protected by the ceramic porous body is easily obtained.

That is, in a first aspect, the present invention provides an acoustic matching body including a ceramic porous body, wherein:
the ceramic porous body includes ceramic particles constituting a ceramic matrix,
the ceramic matrix defines a plurality of pores, and inter-ceramic particle voids are formed in the ceramic matrix. The ceramic porous body constituting the acoustic matching body has a uniform pore diameter distribution. Further, this ceramic porous body has the inter-ceramic particle voids formed in the ceramic matrix, in addition to the pores defined by the ceramic matrix. In other word, this ceramic porous body has a structure having many voids with a high strength as a whole, and therefore, a density thereof is low. Further, a skeleton of the ceramic matrix does not extend linearly and gives a tortuous passage for an ultrasonic wave since the pores and the inter-ceramic particle voids exist. This reduces a propagation speed of the ultrasonic wave. Therefore, this acoustic matching body has a characteristic of a low density and a low sonic velocity and an ultrasonic sensor wherein this acoustic matching body is employed as an acoustic matching layer has an significantly improved ultrasonic propagation characteristic.

Here, the "pore" means a portion which is observed as a vacancy when the ceramic matrix composed of ceramic particles is observed macroscopically (for example, by means of a microscope at about 20x magnification). The "inter-ceramic particle void" means a minute space formed between the particles which construct the ceramic matrix, and it is specifically a small hole having a diameter of not greater than 10µm. Alternatively, it can be said that the "pore" is a vacancy formed by foaming a ceramic slurry according to a below-mentioned method, and the "inter-ceramic particle void" is formed in the ceramics regardless with or without the foaming. Further, the term "acoustic matching body" is used to refer to an independent member before being incorporated, as the acoustic matching layer, into the ultrasonic sensor or the like, and this is called as an "ultrasonic matching layer" after being incorporated. That is, the "acoustic matching body" and the "acoustic matching layer" are not different in function, and they are different in whether or not they are incorporated in the ultrasonic sensor or the like.

In this acoustic matching body, a center value of pore diameter (pore size) distribution is in a range of 100µm to 500µm. When the pore diameter is over 500µm, the ultrasonic wave may be hindered from being propagated. Oh the other hand, in the case where the pore diameter is less than 100µm, although the ultrasonic wave is not hindered from being propagated, trouble may be caused when, as described below, producing an acoustic matching body of a composite structure consisting of this acoustic matching body and another acoustic matching body. Particularly, when the another acoustic matching body is formed by impregnating this acoustic matching body with a liquid material as described below, and the small pore diameter may cause the impregnation not to proceed because of surface tension or may make the solution substitution difficult to proceed.

The ceramic porous body constituting this acoustic matching body preferably has a surface layer and an inner layer which have continuity with the surface layer, a density of the surface layer being larger than that of the inner layer. Here, the term "density" refers to a density which is determined from a mass of a member or an element and an apparent volume (that is, an apparent density). In this specification, the "density" means the "apparent density" unless otherwise noted. Since this construction makes it possible to eliminate or reduce void space in the surface layer, the ultrasonic wave can be efficiently transmitted to a gas when the surface layer is disposed to face' the gas. When the surface layer is used as an attaching face, an adhesive is prevented from penetrating into the body and thereby variation in ultrasonic output between the ultrasonic sensors due to the penetration of adhesive may be reduced.

This ceramic matrix preferably contains a hardly sinterable ceramics. The hardly sinterable ceramics occupies 80vol% of the ceramic matrix, more preferably 90vol% and still more preferably 100vol%.

In a second aspect, the present invention provides an acoustic matching body including a first porous body and a second porous body, wherein:
the first porous body is a ceramic porous body which includes ceramic particles constituting a ceramic matrix, wherein:
the ceramic matrix defines a plurality of pores, and
inter-ceramic particle voids are formed in the ceramic matrix, and
the second porous body is a porous body which has a smaller density and a lower sonic velocity than those of the first porous body. This acoustic matching body presents more favorable matching between a gas and an acoustic impedance thanks to the second porous body.

In the first porous body of the acoustic matching body of the composite structure, the pore has a size such that a center value of pore diameter (pore size) distribution is in a range of 100µm to 500µm. When the first porous body has the pores of such a size and the second porous body is integrated with the first porous body to give the composite by impregnation with a starting material solution for the second porous body, the impregnation with the material solution is facilitated. Further, the pore of such a size does not hinder the propagation of a ultrasonic wave having a frequency of 500kHz.

In this acoustic matching body of composite structure, the second porous body is preferably formed from a dried inorganic oxide gel. The use of the dried inorganic oxide gel enables the density of the second porous body to be smaller than that of the first porous body and the junction between the first porous body and the second porous body to be strengthened.

In this acoustic matching body of composite structure, a peripheral portion of the second porous body is preferably surrounded by the first porous body. That is, a contour in a surface direction of the second porous body (that is, a contour which defines a surface area of the second porous body) preferably contacts with the first porous body. By this construction, the outside edge of the second porous body is prevented from fracturing, and therefore it is possible to control a thickness of the acoustic matching body of this composite structure by polishing a surface where the second porous body is placed.

In this acoustic matching body of composite structure, the second porous body preferably fills a part or all of the pores and the inter-ceramic particle voids in the first porous body. This allows the second porous body to be bonded to the first porous body strongly by an anchoring effect.

In a third aspect, the present invention provides a method for producing an acoustic matching body, which includes:
gelating a bubble-containing ceramic slurry containing at least one kind of hardly-sinterable ceramic powder within a mold to obtain a gel porous molded body;
drying and degreasing the gel porous molded body; and sintering the gel porous molded body. This method is characterized in that the hardly-sinterable ceramic powder is used, and the bubble-containing ceramic slurry is gelated. This production method makes it possible to facilitate to produce the ceramic porous body that is provided according to the first aspect. This production method makes it possible to control the pore size and the porosity and thereby a desired density and a desired sonic velocity can be realized. Further, according to this method, a volume of the final ceramic porous body obtained by sintering is changed by several percentages from a volume of the gel porous molded body before sintering, whereby warpage after sintering can be reduced.

In a fourth aspect, the present invention provides a method for producing an acoustic matching body which includes:
forming a first porous body by a method including:
   gelating a bubble-containing ceramic slurry containing hardly-sinterable ceramic powder within a first mold to obtain a gel porous molded body that has one or more concavities;
   drying and degreasing the gel porous molded body; and
   sintering the gel porous molded; and
forming a second porous body within the one of more concavities by a method including:
   placing the first porous body in a second mold;
   charging a starting material solution for the second porous body in the second mold to impregnate the first porous body with the staring material solution; and
   solidifying the staring material solution.

This production method is characterized in that one or more concavities wherein the second porous body is to be placed are formed in the gel porous molded body before sintering. As described above, since the first porous body can be produced without reducing a change in volume before and after sintering, the concavity having a desired size with a high accuracy can be obtained in the finally-obtained first porous body even if the concavity is previously formed. Further, since the warpage due to sintering hardly occurs in the first porous body, particularly a depth of the concavity is less subject to change before and after sintering. This makes is possible to form the second porous body for which size accuracy is required with a desired and uniform thickness, within the concavity. Therefore, this production method makes it possible to obtain a construction wherein the second porous body with a predetermined size is integrated with the first porous body. Further, since this production method does not require machining the first porous body to form the concavity, this production method makes it possible to easily obtain the construction wherein the peripheral portion of the second porous body is surrounded by the first porous body.

Furthermore, in this production method, the first porous body has not only the pores defined by the ceramic matrix but also the inter-ceramic particle voids, and the second porous body is formed by penetration of the starting material solution for the second porous body into the pore and the voids. For this reason, the final second porous body exerts a higher anchoring effect to be bonded to the first porous body more strongly.

In this production method, the first porous body is preferably placed in the second mold so that the concavity faces the bottom of the second mold. That is, it is preferable that the concavity of the first molded body forms a closed space together with the bottom of the second mold. When the first porous body is impregnated with the start material solution for the second porous body while the first porous body is placed within the second mold in this manner, the second porous body is prevented from being formed at unnecessary portion.

In the formation of the first porous body according to this production method, the gel porous molded body formed in the first mold is preferably dried while the first mold is opened on at least one surface of a side surface, a top surface and a lower surface of the gel porous molded body. This makes it possible to dry the gel porous molded body more efficiently. This drying technique is preferably applied not only to the production of the acoustic matching body of composite structure is obtained, but also to the production of the acoustic matching body of single-layer structure (that is, the acoustic matching body provided according to the first aspect).

Further, the first mold may be preferably opened by sliding a mold wall of the first mold. The technique of sliding the mold wall of the mold effectively suppresses deformation of the gel porous molded body during the drying step and enables a surface of the gel porous molded body to be exposed without damaging the surface.

In the production method of the acoustic matching body of composite structure, the concavity formed in the first porous body is preferably formed after charging the bubble-containing ceramic slurry in the first mold. In other word, it is preferable that the bubble-containing ceramic slurry is charged in the first mold which has not a convex portion for forming the concavity, and then a necessary impressing (or embossing) is carried out for forming the concavity. In the case where the bubble-containing ceramic slurry is cast in the first mold which is as flat as possible, followed by the formation of the concavity, a gas is less liable to remain in the concavity.

In the production method of the acoustic matching body of composite structure, a mold wherein a portion that contacts with at last one surface of the gel porous molded body is formed from a resin is preferably used as the first mold for forming the first porous body. A surface condition of the gel porous molded body may be varied by appropriately selecting a material for the surface which contacts with the gel porous molded body. The mold wherein the face which contacts with the gel porous molded body is formed from the resin is preferably used not only in the production of the acoustic matching body of composite structure, but also in the production of the acoustic matching body of single-layer structure (that is, the acoustic matching body provided according to the first aspect).

In the production method of the acoustic matching body of composite structure, a mold wherein a portion that contacts with at last one surface of the gel porous molded body is formed from a metal is preferably used as the first mold for forming the first porous body. When the surface which contacts with the gel porous molded body is a metal, the pores (the bubbles of the bubble-containing ceramic slurry) are not liable to exist on the surface of the gel porous molded body, whereby a dense surface layer can be formed. The mold wherein the face which contacts with the gel porous, molded body is formed from the metal is preferably used not only in the production of the acoustic matching body of composite structure, but also in the production of the acoustic matching body of single-layer structure (that is, the acoustic matching body provided according to the first aspect).

In a fifth aspect, the present invention provides an ultrasonic sensor which includes a piezoelectric material and an acoustic matching layer, wherein the acoustic matching layer is the acoustic matching body of single-layer structure (that is, the acoustic matching body provided according to the first aspect) or the acoustic matching body of composite structure (that is, the acoustic matching body provided according to the second aspect). This ultrasonic sensor can transmit and receive an ultrasonic wave well and surely because this sensor includes the acoustic matching body of the present invention.

In a sixth aspect, the present invention provides an ultrasonic transmitting/receiving system which includes a piezoelectric material and an acoustic matching layer, wherein the acoustic matching layer is the acoustic matching body of single-layer structure (that is, the acoustic matching body provided according to the first aspect) or the acoustic matching body of composite structure (that is, the acoustic matching body provided according to the second aspect). This ultrasonic transmitting/receiving system can transmit and receive an ultrasonic wave well and surely because this system includes the acoustic matching body of the present invention.

### Effect of Invention

The acoustic matching body of the present invention is characterized in that it has the pores defined by the ceramic matrix and the interparticle voids formed in the ceramic matrix. Since a main material for this acoustic matching body is an inorganic material which shows a smaller characteristic change due to temperature compared with a resin, the ultrasonic sensor wherein the acoustic matching body is incorporated as the acoustic matching layer shows a favorable temperature characteristic (that is, a small change in properties due to temperature). Further, since a density and a porosity of this ceramic porous body may be controlled easily, the acoustic matching body of the present invention can be designed by adjusting the density and the porosity so that it has optimal characteristics to be incorporated into a predetermined ultrasonic sensor. Further, an acoustic matching body of composite structure wherein the ceramic porous body and the inorganic oxide porous body are combined can further improve the acoustic matching with a gas. Therefore, when the acoustic matching body of such composite structure is incorporated as the acoustic matching layer into the ultrasonic sensor, an ultrasonic transmission/reception efficiency can be improved. Further, when an ultrasonic transmitting/receiving system wherein this ultrasonic sensor is used, is employed as a gas flow meter, a ratio of noise signal to main signal can be reduced to improve measurement accuracy of the system and an amplification degree of a received signal can be reduced, whereby a circuit and so on can be simplified.

### Brief Description of Drawings

Fig. 1(a) is a photomicrograph showing a section of a ceramic porous body which constitutes an acoustic matching body according to Embodiment 1 of the present invention, and Fig. 1(b) is a schematic view showing the section of the ceramic porous body which constitutes the acoustic matching body according to Embodiment 1 of the present invention.
Fig. 2(a) is a photomicrograph showing an enlarged section of a ceramic porous body which constitutes the acoustic matching body according to Embodiment 1 of the present invention, and Fig. 2(b) is a schematic view showing the enlarged section of the ceramic porous body which constitutes the acoustic matching body according to Embodiment 1 of the present invention.
Fig. 3 is a flow sheet showing a method for producing the acoustic matching body according to Embodiment 1 of the present invention.
Fig. 4 is a sectional view schematically showing the acoustic matching body according to Embodiment 1 of the present invention.
Figs. 5(a) and (b) show examples of ultrasonic sensors wherein the acoustic matching body according to Embodiment 1 of the present invention is an acoustic matching layer.
Fig. 6(a) is a schematic view showing an acoustic matching body according to Embodiment 2 of the present invention, and Fig. 6(b) is a sectional view schematically showing an example of an ultrasonic sensor wherein the acoustic matching body according to Embodiment 2 of the present invention is an acoustic matching layer.
Fig. 7 is a flow sheet showing an example of a method for producing a second porous body which constitutes the acoustic matching body according to Embodiment 2 of the present invention.
Fig. 8 is a schematic view showing, as Embodiment 3 of the present invention, a method for producing the acoustic matching body according to Embodiment 2 of the present invention.
Fig. 9 is a sectional view schematically showing a part of the acoustic matching body produced according to Embodiment 3 of the present invention.
Fig. 10 is a schematic view showing a step carried out in a method for producing a first porous body which constitutes an acoustic matching body of the present invention, which method is Embodiment 4 of the present invention.
Fig. 11 is a schematic view showing a step which is carried out after the step shown in Fig. 10.
Fig. 12 is a schematic view showing a step which is carried out after the step shown in Fig. 11.
Fig. 13 is a schematic view showing a step which is carried out after the step shown in Fig. 12.
Fig. 14 is a block diagram showing a construction of an ultrasonic flow meter according to Embodiment 5 of the present invention.
Fig. 15 is a waveform chart which is obtained by the ultrasonic flow meter according to Embodiment 5 of the present invention.
Fig. 16 is a sectional view schematically showing a conventional ultrasonic sensor.

### Explanation of Letters or Numerals

1...ceramic porous body, 2...ceramic matrix, 3...pore, 4...surface layer, 5...inner layer, 6...ceramic particle, 7...inter-ceramic particle void, 17...oscillator, 18...oscillator attaching means, 19...adhesive means, 21...cap, 22..terminal, 23...electrically conductive rubber, 24...terminal, 20...gas, 25...surface layer, 26...inner layer, 40...pore, 41...ceramic matrix, 42...first porous body, 43...second porous body, 44...acoustic matching body, 61...second mold, 62...container, 63...concavity, 64...starting material solution, 65...ceramic matrix, 66...pore, 70...mold, 71...upper surface portion, 72...guide portion, 73...side surface portion, 74...fixed bottom portion, 75...movable bottom portion, 76...spacer, 77...bubble-containing ceramic slurry, 81...passage, 82...ultrasonic sensor A, 83...ultrasonic sensor B, 84...transmitting means, 85...receiving means, 86...timer means, 87...switching means, 88...ultrasonic transmitting/receiving system (flow meter), 89...operation means.

### Best Mode for Carrying Out the Invention

Embodiments of the present invention are described with reference to drawings. It, however, should be noted that the present invention is not limited to these embodiments.

### (Embodiment 1)

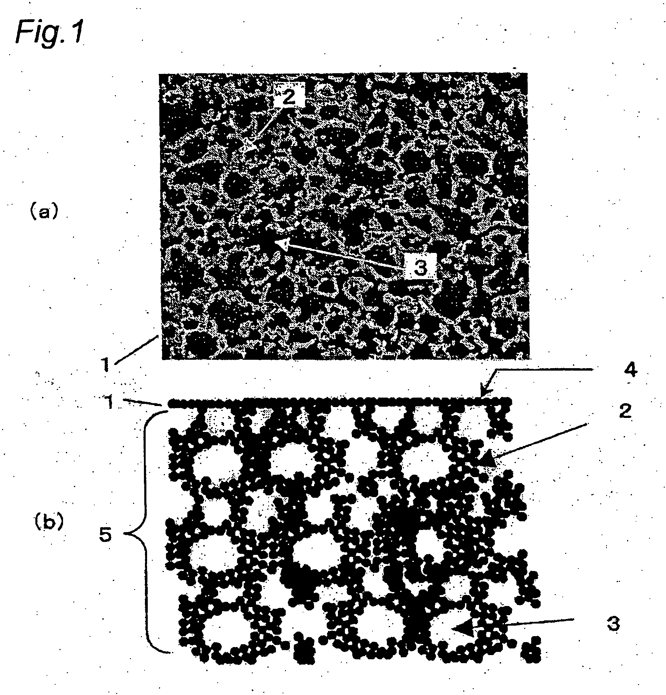

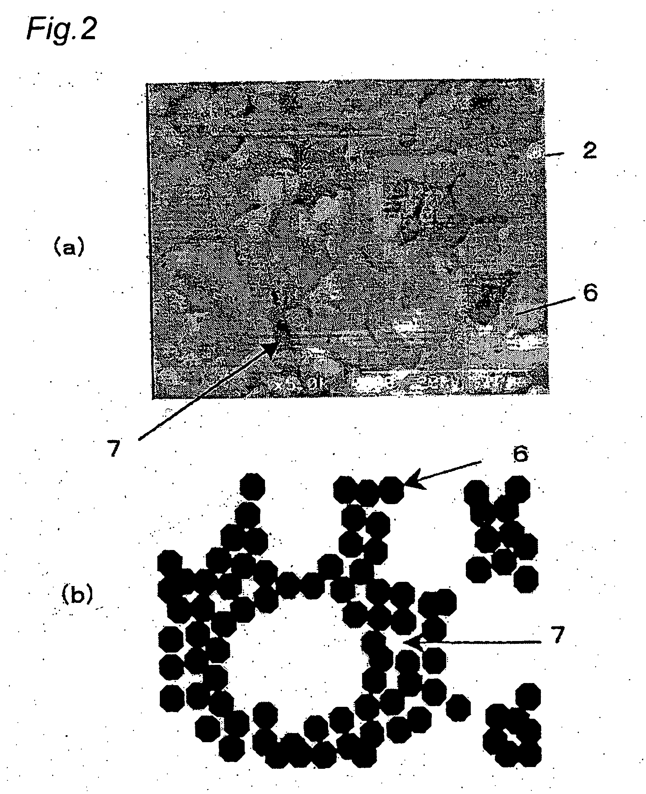

As Embodiment 1 of the present invention, an acoustic matching body formed from a specific ceramic porous body is described. In Fig. 1, (a) is a photomicrograph which shows a section of a ceramic porous body which constitutes an acoustic matching body of the present invention, and (b) shows a schematic view which shows the section of the ceramic porous body which constitutes the acoustic matching body of the present invention. In Fig. 1, "1" denotes a ceramic porous body (an acoustic matching body), "2" denotes a ceramic matrix, "3" denotes a pore which is defined by the ceramic matrix 2, "4" denotes a surface layer and "5" denotes an inner layer. Fig. 2 shows a part of the ceramic matrix 2 in an enlarged view, and (a) is a photomicrograph which shows an enlarged section of the ceramic matrix 2 and (b) is a schematic view showing the enlarged section of the ceramic matrix. In Fig. 2, "6" denotes a ceramic particle and "7" denotes an inter-ceramic particle void.

The ceramic matrix 2 is composed of a known oxide-based or nonoxide-based ceramics, or a clay mineral. The ceramic matrix is composed of single component or a combination of two or more components of these ceramic components. The oxide-based ceramics include an alumina-based, a mullite-based, and a zirconia-based ceramics. The nonoxide-based ceramics include a silicon carbide-based, a silicon nitride-based, an aluminum nitride-based, a boron nitride-based, and a graphite-based ceramics.

The ceramic matrix 2 is a framework defining the pores 3 and a part or all of the framework is composed of the ceramic particles. The ceramic matrix 2 has a structure wherein, for example, the ceramic particles (for example, silicon carbide particles) are bonded to each other. It is considered that such a structure results from bonding of the ceramic particles by oxygen. Here, "the ceramic particles are bonded" means that the ceramic particles contact with each other so that a sound wave is propagated between the ceramic particles. The ceramic particles are generally bonded in a sintering process. A mean particle diameter of the particles constituting the ceramic matrix is preferably at most 10µm, more preferably at most 5µm, still more preferably at most 1µm and most preferably at most 0.6µm. In the case where the mean particle diameter of the ceramic particles which constitute the ceramic matrix is over 10µm, dispersibility of the particles in the slurry may be reduced when producing the acoustic matching body according to a method described below.

The pore 3 defined by the ceramic matrix 2 corresponds to a bubble which is formed with a foaming agent in the ceramic slurry when producing the acoustic matching body according to the method described below. As described above, this pore is such that it is recognized as a vacancy when the section of the acoustic matching body is observed at 20x magnification. The size of the pore 3 is required to be optimally selected in order that this ceramic porous body functions as the acoustic matching layer in the ultrasonic sensor and so on. Specifically, the size of the pore 3 is sufficiently smaller that a wavelength of a ultrasonic wave which is propagated through this acoustic matching body.

When a frequency "f" of an ultrasonic wave is 500kHz and a sonic velocity "C" of the acoustic matching body is 2000m/s, a wavelength "λ" of the ultrasonic wave which is propagated through the acoustic matching body is calculated to be λ=c/f=4mm=4000µm. In this case, the size of the pore in the acoustic matching body is 300µm or greater, the influence of the pore 3 on the ultrasonic propagation is large to reduce an ultrasonic energy which is output from the acoustic matching body. Therefore, in the case where such an ultrasonic wave is propagated, the acoustic matching body of the present invention is preferably constructed so that a center value of pore diameter distribution for the pores 3 is not greater than 300µm. Further, considering a frequency of a general ultrasonic wave (150kHz to 1500kHz), the pore 3 is preferably formed to have a size such that the center value of pore diameter distribution is in a range of 100µm to 500µm. The pore diameter of the pore 3 is defined, from the sectional photograph of the ceramic porous body, as a longest line segment among the line segments each of which connects any two points on a contour of the pore. In the case where a plurality of pores are connected, an auxiliary line is drawn so that each of the connected pores becomes an independent pore having a circular section or an oval section and the pore diameter of the pore after the auxiliary line is drawn is determined. The pore diameter distribution for the pores is desirably determined by measuring the pore diameters for random 100 to 10000 pores.

In this acoustic matching body, there are minute inter-ceramic particle voids 7 between the ceramic particles 6. This void is microscopic and a diameter thereof is less than 10µm. The ceramic particles 6 may be connected with glass interposed therebetween partially, or the ceramic particles 6 may be connected without glass interposed therebetween.

The ceramic porous body 1 including the pores 3 and the inter-ceramic particle voids 7 has a density of from about 0.4g/cm³ to about 0.8g/cm³ and a sonic velocity "C" of from about 2000m/s to about 3000m/s, whereby this can function as the acoustic matching body. The ceramic porous body 1 preferably has a porosity, which is a sum of the pores 3 and the inter-ceramic particle voids 7, of at least 60vol%, and more preferably at least 90vol%.

The illustrated ceramic porous body 1 has the surface layer 4 and the inner layer 5 which has continuity with the surface layer 4. The surface layer 4 is a dense layer to give a smooth surface, in which the pore 3 is not formed or the proportion of the pore 3 is smaller than that in the inner layer 5. The surface layer 4 preferably has a density which is from 2.5 times to 8.5 times as large as a density of the inner layer. The surface layer 4 preferably has a thickness of from about 10µm to about 30µm. When the thickness of the surface layer 4 is over 30µm, the effect of the surface layer 4 on the ultrasonic propagation becomes large. It is generally difficult to make the thickness of the surface layer 4 less than 10µm. The acoustic matching body having the surface layer 4 and the inner layer 5 may be placed in an ultrasonic sensor so that the surface layer 4 is disposed on a gas side, as described below. Although the surface layer 4 has a high density, it is thin and therefore it does not largely affect an acoustic impedance. When the layer 4 is disposed on the gas side, the ultrasonic wave can be transmitted to gas 20 efficiently since the gas is pushed by the smooth surface. Alternatively, the surface layer 4 may be placed so as to face an oscillator attaching member (that is, a container). In that case, the surface layer 4 with no pores or less pores effectively prevents an adhesive from penetrating into the inside of the acoustic matching body.

Further, the bonding between the ceramic particles is required to be sufficiently strong in the ceramic porous body 1 in order that the body 1 functions as the acoustic matching body. In the case where the bonding between the ceramic particles is weak, the ultrasonic wave is difficult to be propagated through the ceramic porous body 1 and the porous body is fragile.

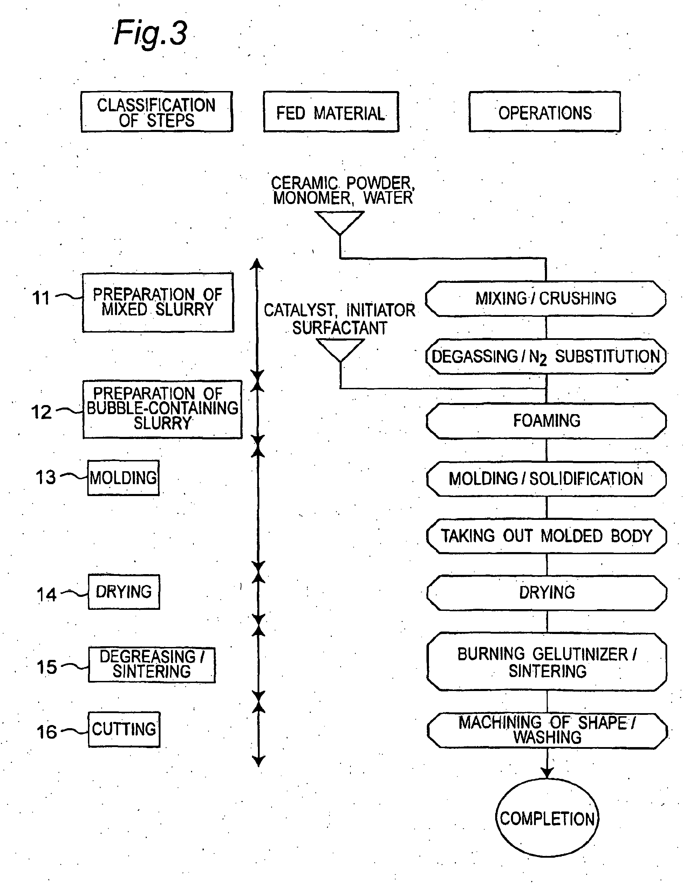

The ceramic porous body wherein the pores 3 and the inter-ceramic particle voids 7 which have the sizes as described above and the bonding between the ceramic particles are sufficiently strong may be produced by, for example, subjecting a gel porous molded body which is obtained by gelation of a bubble-containing ceramic slurry containing hardly-sinterable ceramic powder, to a drying step, a degreasing step and a sintering step. The production method is described with reference to Fig. 3.

As shown in Fig. 3, a method for producing an acoustic matching body of the present invention is classified roughly into sintering of a mixed slurry (a step 11), preparation of the bubble-containing slurry (a step 12), a mold step (a step 13), a drying step (a step 14), a degreasing and sintering step (a step 15) and a cutting step (a step 16). The operations specifically carried out in the respective steps are shown as a flow chart in the right side of the drawing. Further, materials used in the respective steps are shown in the middle row in the drawing.

The step 11 includes a mixing/crushing step in which ceramic powder (for example, silicon carbide and glass) and water (in which an organic solvent is mixed, if necessary) as feed materials are mixed and crushed by, for example, a ball mill to give a mixed slurry, and a defoaming step in which the resultant mixed slurry is defoamed. The ceramic powder contains at least one kind of hardly-sinterable ceramic powder. The hardly-sinterable ceramic powder may be, for example, silicon carbide. The hardly-sinterable ceramics preferably occupies 80vol% of the entire ceramic powder, more preferably 90vol% and still more preferably 100vol%. As the portion of the hardly-sinterable ceramic powder is larger, a change in volume during the sintering step is smaller and warpage is less liable to occur. Crushing is carried out so that the sizes of the particles are even. Defoaming may be carried out in a glove box filled with nitrogen. For this purpose, a degassing and nitrogen-substituting step is carried out before the defoaming step.

The step 12 is a foaming step in which a surfactant (a foaming agent) and a gelatinizer are added to the mixed slurry and they are mixed with an agitator under an nitrogen atmosphere. In this step, the kind of the surfactant, the kind of the ceramic powder, a speed of the agitator, an agitation time, and a temperature are parameters which determine the size and the distribution of the contained bubble (that is, the pore defined by the ceramic matrix in the ceramic porous body). Therefore, these parameters are required to be appropriately selected so that a desired pore is obtained. This step is an important step which determines the porous structure.

The step 13 is a step of forming a gel porous molded body by transferring the resultant bubble-containing ceramic slurry in a mold of any shape followed by gelation. The gelation proceeds by leaving the slurry in the closed mold for several tens of minutes. The mold may be of a cylindrical shape having a diameter of about 10mm to about 20mm, particularly 10.8mm.

The step 14 is carried out for taking out the gel porous molded body from the mold and removing moisture and a part of organic component. Since the gel porous molded body is firm (solidified) to be held by hands, it is easily handled. Alternatively, the step 14 may be carried out by sliding a part of mold walls of the mold to expose at least one surface of an upper surface, a lower surface and a side surface of the gel porous molded body. Thereby, the possibility of damaging the gel porous molded body is reduced since there is no need to take out the gel porous molded body from the mold.

The drying is preferably carried out, preventing the bubbles contained in the gel porous molded body from decomposing, moving and aggregating. For example, the gel porous molded body is preferably dried slowly at a temperature of not less than 20°c and not greater than 30° C for 48 hours or longer time.

The step 15 includes a degreasing step in which the dried porous molded body is heated to a temperature necessary to remove excess organic component contained in the body, and a sintering step in which sintering (or firing or calcination) is carried out at a high temperature so that the ceramic powder are bonded to form the matrix. Specifically, the temperature and the time period of degreasing are determined depending on the kind and the amount of the used organic components. For example, the sintering may be carried out at from 400°C to 700°C for from 24 hours to 48 hours so as to burn out the gelatinizer. The sintering temperature is determined depending on the ceramic powder employed (that is, the glass or the hardly-sinterable ceramic powder). For example, when silicon carbide and glass having a melting point lower than that of silicon carbide are employed as the ceramic powder, the sintering is carried out at, for example, 800°C. The sintering time period may be, for example, from 12 hours to 48 hours. When the ceramic powder containing silicon carbide and glass is employed, it is considered that a part of the silicon carbide particles are bonded to each other by the glass and most of the silicon carbide particles are bonded to each other by oxygen in this sintering process. Alternatively, only silicon carbide may be used as the ceramic powder. In that case, the sintering temperature may be from 900°C to 1350°C, and the sintering time period may be, for example, from 12 hours to 48 hours.

The step 16 is a machining step for cutting the resultant sintered body (a ceramic porous body) into a size necessary for making the body function as the acoustic matching body. An optimal thickness "t" of the acoustic matching body is determined based on a formula t=C/(4f) wherein the sonic velocity of the ceramic porous body is "C" and the frequency of the ultrasonic wave is "f." Therefore, for example, when the sonic velocity "C" is about 2000m/s and the frequency "f" of the ultrasonic wave employed is 500kHz, the machining process is carried out so that t=lmm.

The structure as shown in Fig. 1 wherein the surface layer 4 and the inner layer 5 are included in one ceramic porous body may be formed by a technique of making gradient orientation of bubbles in the foaming step included in the step 12 for preparing the bubble-containing slurry and the step 13 which is the forming step which are shown in Fig. 3. Specifically, the gradient orientation of bubbles may be carried out by adjusting the solid content in the mixed slurry or the viscosity of the slurry in the step 11.

Alternatively and more simply, in the case where a mold is used in the forming process as the step 13, in which mold a portion which contacts with the bubble-containing slurry (that is, a surface which contacts with at least one surface of the solidified gel porous molded body) is made from a specific resin or a metal, the bubbles cannot exist in an interface between the mold and the ceramic slurry. The portion wherein the bubbles cannot exist is formed as the surface layer 4. When a PET resin is selected as the resin, a dense surface layer 4 can be formed. For example, stainless may be selected as the metal. The surface layer that is formed by the contact of the slurry with the metal surface tends to be thicker than the surface layer that is formed by the contact of the bubble-containing slurry with the resin surface. Further, when the surface of the mold is formed from Teflon (registered trademark), a surface of the gel porous material which contacts with the mold does not form a dense surface layer, and a surface having pores are liable to be formed.

The ceramic porous body produced in this manner is a structure which has the pore 3 whose center value of pore diameter distribution is in a range of 100µm to 500µm, the porosity of at least 60vol%, and an apparent density of from about 0.4g/cm³ to about 0.8g/cm³. In the ceramic porous body, a plurality of pores 3 are connected to form continued pores. The sonic velocity in this structure is from about 2000m/s to about 3000m/s as described above, and therefore this structure can be used as the acoustic matching layer.

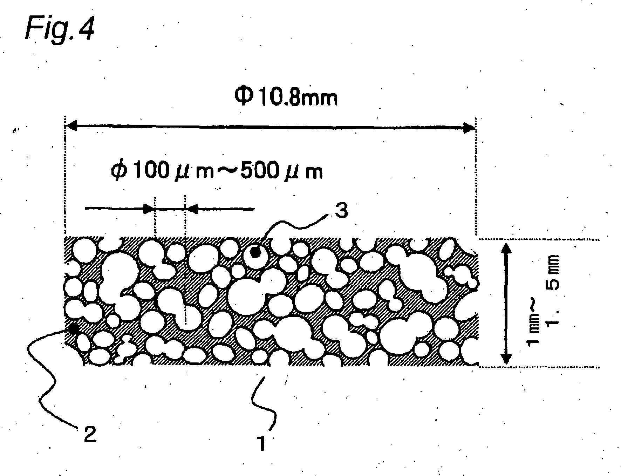

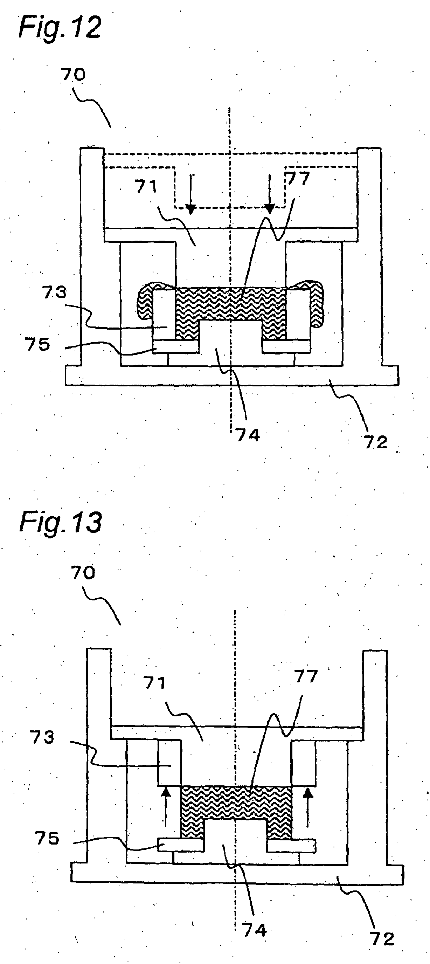

In Fig. 4, an acoustic matching body of the present invention is schematically shown in a sectional view. Fig. 4 shows a cylindrical acoustic matching body having a diameter of 10.8mm which is machined so that a thickness is from about 1mm to about 1.5mm. In Fig. 4, an embodiment which does not have the surface layer, but the surface layer may be formed on one of the principal surfaces (surfaces which are vertical to the thickness), as shown in Fig. 1. The surface layers may be formed on both of the principal surfaces. In that case, the thickness of the molded body obtained after the step 15 shown in Fig. 13 is required to be a desired one. This is because one of the surface layers is scraped off when the desired thickness is intended to be achieved by polishing the principal surface in the machining process. In the case where the structure as shown in Fig. 4 is produced wherein the surface layer is not placed on either surface, a material constituting the exposed surface of the mold may be appropriately selected so that the surface layer is not formed. Alternatively, the surface layer may be scraped off when the thickness of the sintered ceramic porous body is made a predetermined thickness.

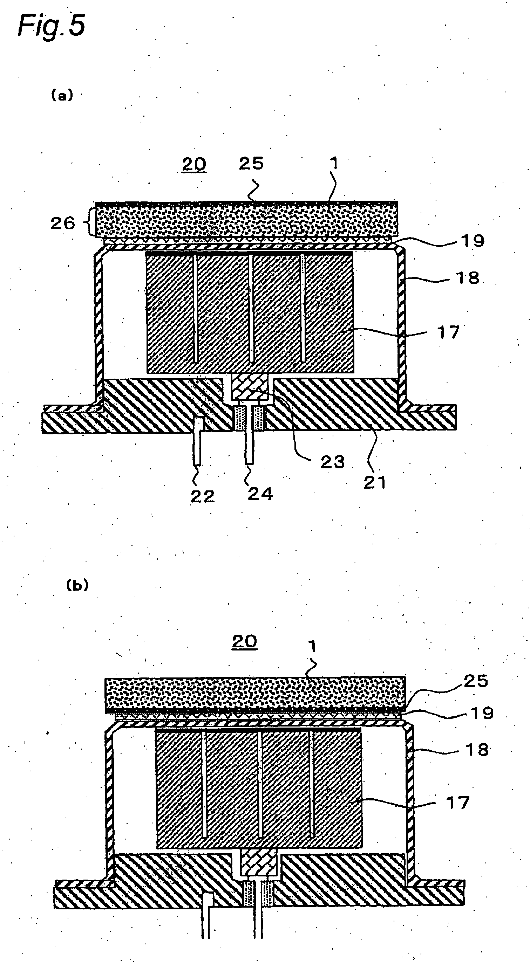

In Figs. 5(a) and 5(b), sectional views of ultrasonic sensors wherein the acoustic matching bodies of the ceramic porous bodies as produced in this manner are employed are shown. In Figs. 5(a) and 5(b), "1" denotes the ceramic porous body (the acoustic matching layer), "17" denotes an oscillator, "18" denotes an oscillator attaching member, "19" means an adhesive means, and "20" means a gas. The illustrated ceramic porous body 1 is of a structure including a surface layer 25 and an inner layer 26. Fig. 5(a) shows the ultrasonic sensor wherein the surface layer 25 is placed on the gas side, and Fig. 5(b) shows the ultrasonic sensor wherein the surface layer 25 is placed so as to contact with the adhesive means 19.

The adhesive means is, for example, an epoxy adhesive. The oscillator attaching member 18 is made of a metal and a cap 21 is attached so that the oscillator 17 is placed within a closed space.

The cap 21 is made of a metal. A terminal 22 is attached to this cap to give an electrical connection between this terminal 22 and the upper electrode of the oscillator electrodes which are provided above and below the oscillator 17. Further, the lower electrode of the oscillator 17 is electrically connected to the other terminal 24 via an electrically conductive rubber 23. The terminal 24 is insulated from the cap 21.

When an electrical signal from an ultrasonic signal generator is applied to the terminals 22 and 24, the oscillator 17 produces longitudinal vibration and the vibration is transmitted to the ceramic porous body (the acoustic matching layer) 1. The ceramic porous body 1 vibrates at a larger amplitude than that of the oscillator 17 and the vibration is transmitted to the gas 20 efficiently.

The ceramic porous body (the acoustic matching layer) 1 has a construction which can be sectioned into the surface layer 25 and the inner layer 26. As described with reference to Fig. 1, the surface layer 25 has a denser structure than that of the inner layer 26, and has extremely less pores or no pores. The thickness of the surface layer 25 is about 10µm to about 30µm. The method for producing the ceramic porous body which has the surface layer 25 and the inner layer 26 is as described with reference to Fig. 3, and the description thereof is omitted here.

The bonding between the ceramic porous body (acoustic matching layer) 1 and the oscillator attaching member 18 is made using the adhesive means 19, such as an epoxy adhesive. In the case where the pores exist in the bonding face of the ceramic porous body (the acoustic matching layer) 1, adhesion unevenness may be caused due to penetration of the epoxy adhesive. When the adhesion unevenness is caused, there is disadvantage that variation in ultrasonic output is caused between the ultrasonic sensors of the same specification. In order to avoid this advantage, the surface of the surface layer 25 may be bonded, as the bonding face, to the oscillator attaching member 18, as shown in Fig. 5(b).

### [Embodiment 2]

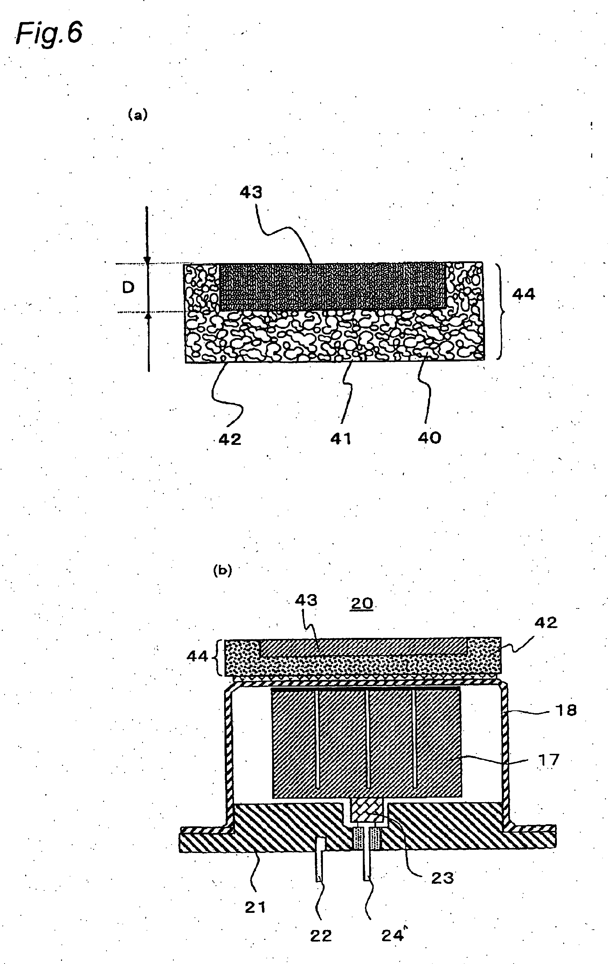

In Fig. 6(a), an acoustic matching body of a composite structure is shown as Embodiment 2 of the present invention. In Fig. 6(b), an acoustic sensor wherein the acoustic matching body is an acoustic matching layer is shown. The acoustic matching body 44 shown in Fig. 6(a) is of a disc shape with a diameter of 10.8mm and a thickness of 1.8mm, and has a composite structure wherein the above-described ceramic porous body is included as a first porous body 42 and a concavity formed in the first porous body 42 is filled with a second porous body 43.

In Fig. 6(a), the first porous body 42 is illustrated as a structure having a ceramic matrix 41 which serves to be a framework, wherein pores 40 are defined by the ceramic matrix 41, but, as described with reference to Fig. 1, the inter-ceramic particle voids are formed in the ceramic matrix 41. Further, the ceramic porous body 42 is produced, similarly to Embodiment 1, by drying, degreasing and sintering a gel porous molded body which is obtained by gelataion of a bubble-containing ceramic slurry which includes hardly-sinterable ceramic powder (for example, silicon carbide powder). In the first porous body 42, a plurality of pores 40 are connected to form a continued pore similarly to the case of the acoustic matching body of Embodiment 1.

The second porous body 43 has a lower density and a lower sonic velocity than the first porous body 42. Because the density and the sonic velocity of the second porous body is low, the acoustic matching body of Embodiment 2 can increase an ultrasonic output compared with the acoustic matching body of Embodiment 1. Specifically, the second porous body 43 is preferably a dried gel of an inorganic oxide such as silica. In the following, a method for producing dried silica gel.

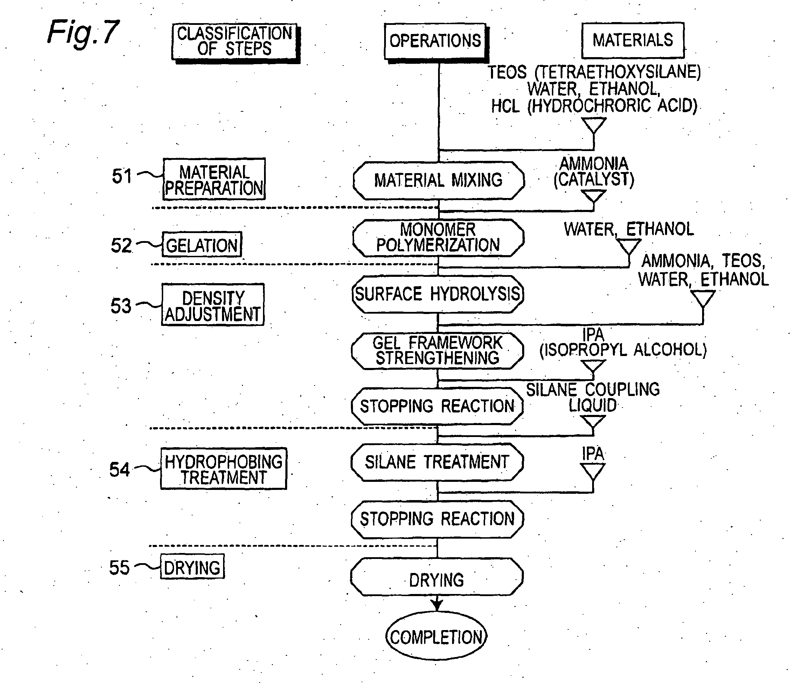

As shown in Fig. 7, production of the dried silica gel is roughly classified into a material preparation step (a step 51), a gelation step (a step 52), a density adjusting step (a step 53), a hydrophobing treatment step (a step 54), and a drying step (a step 55). In Fig. 7, the operations specifically carried out in the respective steps are shown as a flow chart in the middle row in the drawing. Further, materials fed in the respective steps are shown in the right row in the drawing.

The step 51 is a step for preparing a mixed solution by adding, to tetraethoxysilane which is a main material, ethanol, hydrochloric acid, and water for hydrolyzing the tetraethoxysilane.

The step 52 is a step for producing a gel by adding ammonia to the prepared mixed solution. In this step, silica as a monomer is polymerized to give a porous gel.

The step 53 is a step for strengthening the resultant gel framework to obtain a desired density. In this step, tetraethoxysilane, water, ethanol and ammonia are added and the hydrolysis reaction proceeds again to strengthen the gel framework. In this step, the gel density is made a desired one by controlling a reaction time and a temperature. The reaction for strengthening the gel framework is stopped by substituting isopropyl alcohol for the solution.

The step 54 is a treatment for preventing the resultant dried gel from absorbing moisture. In this step, the gel is put into into a silane coupling treatment solution so as to advance the silane coupling reaction, followed by substitution of isopropyl alcohol for the solution so that the silane coupling reaction stops.

The step 55 is a final step for obtaining the dried gel by evaporating the isopropyl alcohol.

The dried gel produced by these production steps has a pore of a nanometer size, and the density thereof is adjusted to from 0.2g/cm³ to 0.5g/cm³ and the sonic velocity thereof is from 300m/s to 500m/s. Therefore, an acoustic impedance of this dried gel can be smaller than that of the ceramic porous body which is the first porous body.

The second porous body 43 is placed within a depressed portion formed in the first porous body 42. The edge of the second porous body 43 is protected by the first porous body 42 by placing the second porous body 43 so that the peripheral edge thereof contacts with the first porous body 42. Therefore, since the edge of the second porous body 43 is effectively prevented from fracturing by employing this composite structure, a thickness "D" of the second porous body 43 can be easily made a desired thickness by polishing the surface of the body 43. In the case where the second porous body 43 is made of, for example, a dried silica gel, the body 43 is formed to have a diameter of about 8mm and a thickness of from 0.15mm to 0.4mm within the first porous body 42 having a diameter of about 10.8mm. The second porous body 43 of such a size is obtained by forming a shallow depressed portion of the above-mentioned diameter in the first porous body 42 and disposing the second porous body 43 within this depressed portion according to a below-mentioned method followed by polishing the surfaces of the first porous body 42 and the second porous body together. In a variation of this embodiment, a plurality of concavities (for example, two or more ring-shaped concavities having different diameters) are formed in the first porous body, and the second porous bodies 43 may be placed in two or more positions (for example, in a form of rings having different diameters).

Fig. 6(b) shows a structure of an ultrasonic sensor wherein a composite-type acoustic matching layer 44 is employed. The ultrasonic sensor shown in Fig. 6(b) has the same structure as that shown in Fig. 5(a) and the reference numerals employed in Fig. 5(a) denote the same elements or members as those shown in Fig. 5(a). The ultrasonic sensor shown in Fig. 6(b) can increase an ultrasonic output compared with the ultrasonic sensor wherein the acoustic matching body of Embodiment 1 is employed, since the ultrasonic matching layer has a composite structure and the density of the second porous body 43 is smaller than that of the first porous body 41.

### [Embodiment 3]

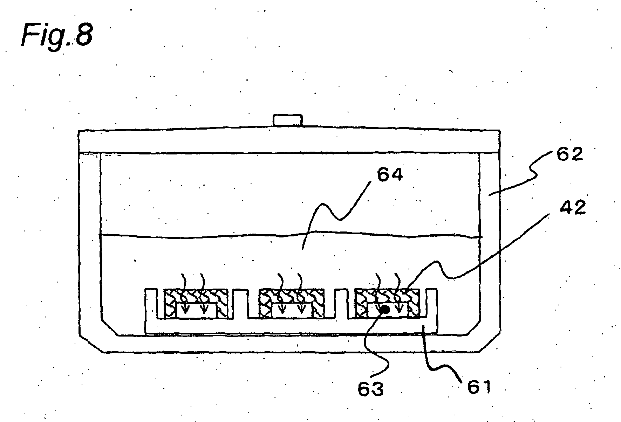

In Fig. 8, a method for producing an acoustic matching body of composite structure is schematically shown as Embodiment 3 of the present invention. Fig. 8 shows a state wherein the first porous bodies 42 with a concavities 63 for disposing the second porous body therein are placed on a mold 61 with the concavity 63 down and they are put in a container 62. For distinguishing the mold 61 used here from the mold used for forming the second first porous body 42, the mold for forming the second porous body is referred to as a second mold for convenience, and the mold for forming the first porous body is referred to as a first mold for convenience. Therefore, the mold 61 is the second mold. The container 62 is filled with a starting material solution 64 which is prepared in the step 51 shown in Fig. 7 which step is described in connection with Embodiment 2. When the mold 61 is immersed in this solution 64, the solution 64 penetrates the continued pores in the first porous body 42 which is the ceramic porous body. As a result, the concavity 63 is filled with the solution 64. Next, the step 52 shown in Fig. 7 is conducted keeping this state. Herein, the continued pores in the first porous body 42 are open cells which are formed by connection between the pores defined by the ceramic matrix, connection between the pore and the interparticle void and connection between the interparticle voids.

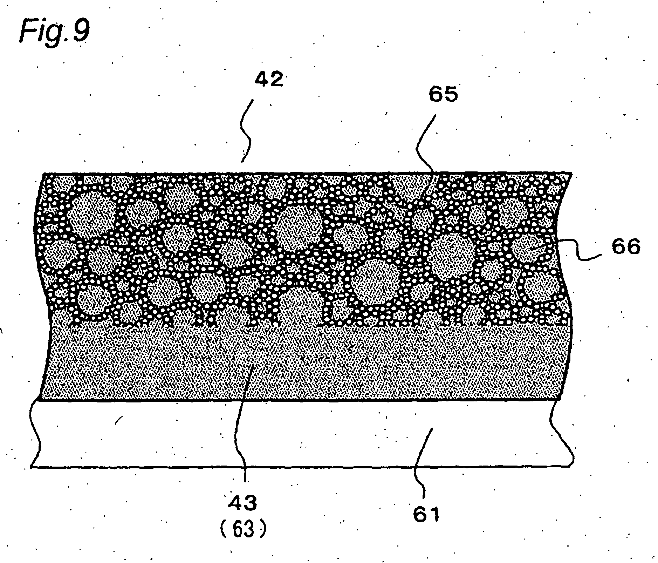

Fig. 9 is an enlarged view of a part of the first porous body 42 placed on the mold 61 shown in Fig. 8. Since the concavity 63 formed in the first porous body 42 is filled with the solution penetrating the continued pores in the body 42, the gel is also formed within the continued pores of the first porous body (this gel finally serves to form the second porous body 43). The gel formed within the concavity 63 also contacts with the mold 61. In Fig. 9, only the pores 66 defined by the ceramic matrix 65 are shown and the continued pores formed by these pores are shown, but it should be noted that the continued pores are formed between the pore 66 and the inter-ceramic particle void, and between the inter-ceramic particle voids.

Since the density adjustment is carried out as the step 53 under this configuration, the newly added mixed solution of tetraethoxysilane, water, ammonium and ethanol also reaches the gel formed in the concavity 63 through the gel formed within the pores 66 in the first porous body 42, so as to strengthen the framework of the gel within the concavity 63 and the pore 66. Then, the steps up to the step 54 are carried out maintaining this configuration.

The solution and the solvent used in each step reach the concavities 63 by passing through the gel formed within the pore 66 in the first porous body 42. In other words, the solution and so on which have passed through the gel formed within the pore 66 strengthen the gel framework formed within the concavity 63 or stop the reaction proceeding in the gel. Therefore, the pore 66 in the first porous body 42 is too small, there is disadvantage that the solution insufficiently penetrates to reach the gel 43 formed within the concavity 63. When the pore 66 in the first porous body 42 is too large, the ultrasonic propagation is hindered. For this reason, the first porous body 42 is preferably formed so that the center value of the pore diameter distribution for the pore 66 defined by the ceramic matrix is in a range of 100µm to 500µm. The size of the pore 66 in the first porous body 42 is adjusted as described in connection with Embodiment 1 in the preparation step of the bubble-containing slurry which step is the step 12 shown in Fig.3.

According to the method wherein the second porous body is formed by impregnation of the necessary materials so that the second porous body passes through the continued pores formed by the pores and so on defined by the matrix of the ceramic porous body as the first porous body, the steps up to the drying step for obtaining the second porous body may be carried out with a closed space formed by the concavity formed in the first porous body and the surface of the mold. As a result, a crack is less liable to be formed in the gel during the formation of the second porous body. In other words, when the inorganic oxide gel is produced as a single gel according to the production method shown in Fig. 7, there is disadvantage that the crack is liable to be formed in the gel since the surface of the gel is exposed. This production method, however, makes it possible not to form the crack, since the portion which is to become the second porous body is protected by the first porous body to be less susceptible to stress. Further, since the second porous body is formed in contact with the mold as shown in Fig. 9, its surface becomes very smooth when the surface of the mold is flat and smooth.

The acoustic matching body obtained by this production method has a structure wherein at least a part of the pores defined by the matrix of the first porous matrix and the inter-ceramic particle voids in the matrix is filled with the second porous body. Therefore, the first porous body has a higher density than that of the acoustic matching body described in connection with Embodiment 1. Since an acoustic impedance of the first porous body is preferably between an acoustic impedance of the second porous body and an acoustic impedance of the oscillator in the acoustic matching body of composite structure, the fist porous body may be required to have a lager density compared with the case where the only first porous body is used as the acoustic matching body. In that case, the increase in the apparent density of the first porous body due to the filling with the second porous body is rather preferable from the viewpoint that the acoustic matching body is constructed to have a composite structure suitable for the ultrasonic propagation. Alternatively, since the density of the ceramic porous body as the first porous body may be easily adjusted by adjusting the porosity, the first porous body may be easily produced so that it has a desired acoustic impedance depending on the kind of the second porous body.

### [Embodiment 4]

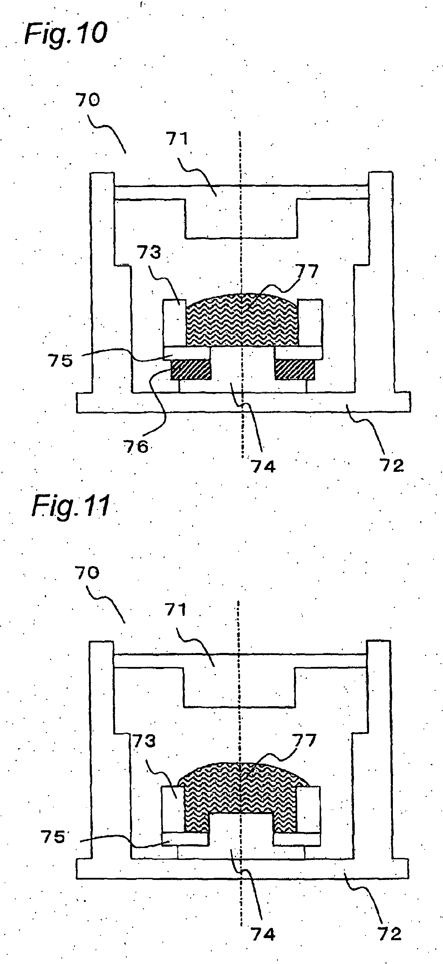

In Figs. 10 to 13, a method for producing a first porous body of an acoustic matching body of a composite structure is schematically shown, as Embodiment 4 of the present invention. These drawings show a step of producing a gel porous molded body by gelating a bubble-containing slurry containing hardly-sineterable ceramic powder, and a mold for carrying out this step (that is, the first mold). The mold 70 shown in Fig. 10 is composed of an upper surface portion 71, a side surface portion 73, a movable bottom portion 75, and a fixed bottom portion 74 which are mold walls, and a guide portion 72 and a spacer 76.

Firstly, a bubble-containing ceramic slurry 77 is poured into a space surrounded by the side portion 73, the fixed bottom portion 74 and the movable bottom portion 75. During this operation, the bottom surfaces 24 and 25 are flushed by raising the movable bottom portion 75 by means of the spacer 76. Therefore, when the bubble-containing ceramic slurry 77 is poured gradually into the center portion, the slurry spreads into every corner within the mold and fills the space which is surrounded by the side surface portion 73, the fixed bottom surface portion 74, and the movable bottom portion 75 without leaving gas. When the spacer 76 is removed from this state as shown in Fig. 11, the side surface portion 73 and the movable bottom surface portion 75 are slid downwardly, and thereby the fixed bottom portion 74 is pushed into the ceramic slurry, whereby a circular concavity for forming the second porous body is formed. A grease is preferably applied between the movable bottom portion 75 and the fixed bottom portion 74 to make it harder for the gas to enter from outside.

The bubble-containing slurry is bulged as a result of sliding of the side surface portion 73 and the movable bottom portion 75. The bulged slurry 77 is removed by moving the upper surface portion 21 downwardly to push off an excess amount of slurry out of the mold and the slurry is made flat, as shown in Fig. 12. In this state, the bubble-containing ceramic slurry 77 is gelated. After completing the gelation, the side surface portion 73 is slid upwardly to make an open side surface of the gel porous molded body. Thereby, moisture contained in the gel porous molded body is facilitated to be evaporated, and the drying time is shortened. Further, the gel is dried without damaging the surface of the gel by sliding the side surface portion 73 upwardly to expose the surface of the gel porous molded body.

After the gel porous molded body is completely dried, the upper surface portion 71 is moved upwardly and the dried gel porous molded body 77 is taken out. After then, the gel porous molded body is sintered to give a ceramic porous body. The ceramic porous body is formed, for example, into a disc shape having a diameter of 10.8mm and a thickness of 1.8mm. After sintering, the bubbles in the bubble-containing slurry form continued pores in the ceramic porous body, as described above. The ceramic porous body thus obtained is to form the first porous body 42 in the acoustic matching body of composite structure shown in Fig. 6(a).

In Fig. 13, the surface of the first porous body which surface contacts with the upper surface portion 71 is a surface which is bonded by an adhesive to the oscillator attaching member 18 of the ultrasonic sensor shown in Fig. 6(b). Therefore, when the pores exist in this surface, there may be disadvantage that the adhesive penetrates during assembling the ultrasonic sensor. In order to avoid this advantage, the surface of the upper surface portion 71 which contacts with the first porous body may be formed from, for example, a PET resin or a metal so that the bubbles are less liable to exist at an interface between the mold and the bubble-containing slurry, whereby a dense and thin surface layer with no or less pores can be formed. This surface layer gives a dense surface to prevent the penetration of the adhesive and to ensure adhesion.

As described above, in the case where the surface of the mold is made of Teflon (registered trademark), the dense surface layer is not formed and a surface having the pores tends to be formed. Therefore, in the case where the fixed bottom portion 74, the movable bottom portion 75 and the side surface portion 73 are formed of Teflon (registered trademark), the pores exist in the surfaces which contact these portions during the gelation of the bubble-containing ceramic slurry. In the case where the ceramic porous body where the pores exist in the surfaces is used as the first porous body, the second porous body can be formed by the method as shown in Fig. 8. That is, when the mold wherein the upper surface portion 77 is made of a PET resin or a metal and the other portions are made of Teflon (registered trademark), a surface of the first porous body 42 on which surface the second porous body is not placed is a dense surface with less pores, and the side and the bottom surfaces of the body 42 are surfaces with pores. Therefore, in the case where the second porous body is formed by the method as shown in Fig. 8, the solution 64 passes through the pores in the side surface of the first porous body 42 and is gelated within the concavity and the pores, and the surface of the first porous body which surface does not contact with the second mold in Fig. 8 is used as the bonding face when assembling the ultrasonic sensor.

### [Embodiment 5]

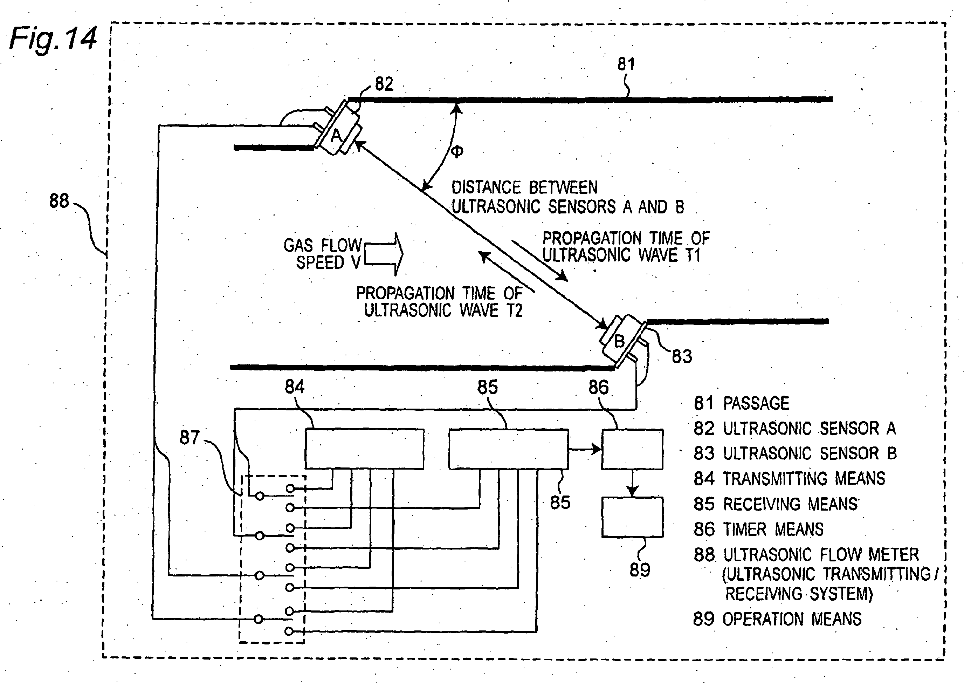

As Embodiment 5 of the present invention, an ultrasonic transmitting/receiving system including an ultrasonic sensor provided with the acoustic matching body of the present invention is described with reference to Fig. 14. Fig. 14 is a circuit block diagram showing an ultrasonic transmitting/receiving system of the present invention which is incorporated in a flow meter 88 for measuring a gas flow rate. An ultrasonic sensor "A" 82 and an ultrasonic sensor "B" 83 are disposed in a gas passage 81. The ultrasonic sensors "A" and "B" are placed such that the ultrasonic propagation makes an angle ϕ with the gas passage. A transmitting signal is sent to the ultrasonic sensor "A" 81 and the ultrasonic sensor "B" 83 by a transmitting means 84. Further, received signals of the ultrasonic sensors are transmitted to a receiving means 85. Transmitting or receiving is selected by a switching means 87. When the switching means 87 selects the connection of the ultrasonic sensor "A" 82 to the transmitting means 84, the ultrasonic sensor "B" 83 is connected to the receiving means 85.

As shown in Fig. 14, when the gas flows from the left to the right in the drawing, the ultrasonic wave received by the ultrasonic sensor "A" 82 reaches the ultrasonic sensor "B" 83 after a propagation time T1. On the contrary, the ultrasonic wave received by the ultrasonic sensor "B" 83 reaches the ultrasonic sensor "A" 82 after a propagation time T2. Herein, T1<T2 is established since the gas flow direction is left-to-right one. These times T1 and T2 are measured by a timer means 86. This time relates to a flow speed of gas. Further the flow rate of gas is calculated from the flow speed and a sectional area of the passage, the flow rate can be determined by determining the flow speed from T1 and T2. An operation means 89 determines the flow rate based on the data from the timer means 86.

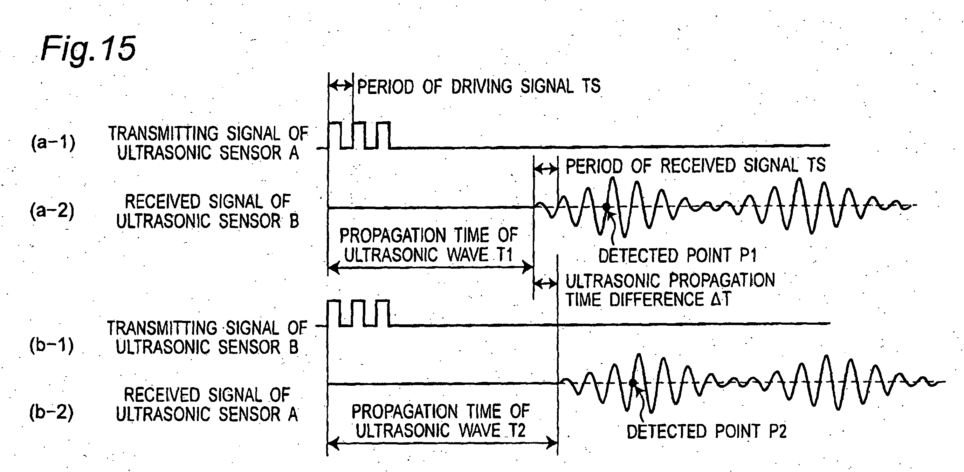

Fig. 15 is a waveform diagram which shows waveforms of the transmitting signal and the received signal of the ultrasonic sensors. In Fig. 15, the transmitting signal to the ultrasonic sensor "A" is shown as a-1 and the received signal of the ultrasonic sensor "B" 83 is shown as a-2 when the ultrasonic sensor "A" 82 transmits the ultrasonic wave and the ultrasonic sensor "B" 83 receives the ultrasonic wave. Further, in Fig. 15, the transmitting signal to the ultrasonic sensor "B" is shown as b-1 and the received signal of the ultrasonic sensor "A" 82 is shown as b-2 when the ultrasonic sensor "B" 83 transmits the ultrasonic wave and the ultrasonic sensor "A" 82 receives the ultrasonic wave.

The receiving means 85 amplifies the received signal. For this reason, when the ultrasonic sensor is assembled using the acoustic matching layer of composite structure such as Embodiment 2, a large received signal can be obtained, whereby an amplifying circuit means may be a small-sized one. When the received signal of the ultrasonic sensor is called as a "main signal" and unnecessary signals which generate in the amplifying circuit means or enter from outside are called as a "noise", as the main signal is larger, the amplification degree is reduced and the noise by the amplifying circuit means is reduced. Further, since a ratio of the main signal to the noise from the outside is larger, the noise makes less apparent effect. These facts result in improvement in the measurement accuracy.

An initial wave of the received signal is difficult to be detected since it is small. For this reason, the receiving means 85 detects points P1 and P2, for example, of the third wave by a comparator circuit means. Consequently, when the waveform is changed due to temperature, a measurement error is increased. In the case where the acoustic matching layers in the ultrasonic sensors "A" and "B" are formed from an inorganic material, the effect on the waveform is reduced and therefore the measurement accuracy can be improved since the acoustic characteristics of the inorganic material is less susceptible to change due to temperature. Since the acoustic matching body of the present invention contains a ceramic porous body of an inorganic substance, it suppresses the deformation of the waveform due to temperature and contributes to improvement in measurement accuracy.

Further, the acoustic matching body of composite structure described as Embodiment 2 is obtained as a composite body wherein the dried inorganic oxide gel is employed as the second porous body and the pores defined by the ceramic matrix of the first porous body and the inter-ceramic particle voids in the ceramic matrix are filled with the second porous body by a method for producing the dried gel in which method the first porous body that is the ceramic porous body is impregnated with the mixed solution which is a material for the second porous body. In this structure, the second porous body which fills both the pores and the inter-ceramic particle voids has an anchor effect to give a high bonding strength between the second and the first porous bodies. For this reason, delamination does not occur between the first and the second porous bodies even if a large transmitting signal is sent by the transmitting means 84 to the ultrasonic sensor to oscillate the acoustic matching body at a large amplitude. Therefore, particularly when the acoustic matching layer of composite structure is used, the ultrasonic transmitting/receiving system of the present invention increases the transmitting signal to give a large receiving signal, resulting in high measurement accuracy. Further, in the acoustic matching layer of composite form, the second porous body gives favorable acoustic matching and the first porous body determines the waveform of the received signal and forms a signal having a large amplitude which signal is advantageous for measurement at the specific points (P1 and P2 in Fig. 15). Therefore, the acoustic matching layer of composite form of the present invention is, as a whole, excellent in both of acoustic matching and waveform formation.

### Industrial Applicability

As described above, the acoustic matching body according to the present invention makes it possible to match an acoustic impedance of oscillator to that of a gas, to improve the ultrasonic output from the ultrasonic generator and to improve the reception output of the ultrasonic receiving system which receives the ultrasonic wave which propagate through the gas. Therefore, the acoustic matching body of the present invention is suitable for being used in a commercial or a household ultrasonic gas flow meter (for example, a gas meter) which measures flow rates of a natural gas and a liquefied petroleum gas, and a ultrasonic flow meter which measures a flow rate of a gas, such as hydrogen, which has a large sonic velocity and whose acoustic impedance is difficult to be matched to that of the oscillator.

## Claims

1. An acoustic matching body comprising a ceramic porous body that comprises ceramic particles constituting a ceramic matrix, wherein:
the ceramic matrix defines a plurality of pores, and
inter-ceramic particle voids are formed in the ceramic matrix,
**characterized in that**
the pores have a size such that a center value of pore diameter distribution is within a range of 100 µm to 500 µm.

2. The acoustic matching body according to claim 1, wherein the ceramic porous body has a surface layer and an inner layer which has continuity with the surface layer, and a density of the surface layer is larger than a density of the inner layer.

3. The acoustic matching body according to claim 1, further comprising a a second porous body, wherein:
the second porous body is a porous body which has a smaller density and a lower sonic velocity than a density and a sonic velocity of the ceramic porous body.

4. The acoustic matching body according to claim 3, wherein the second porous body is a dried inorganic oxide gel.

5. The acoustic matching body according to claim 3, wherein a peripheral portion of the second porous body is surrounded by the ceramic porous body.

6. The acoustic matching body according to claim 4, wherein a part or all of the pores and the inter-ceramic particle voids are filled with the second porous body.

7. The acoustic matching body according to claim 1 or 3, wherein the ceramic matrix comprises a hardly-sinterable ceramics.

8. A method for producing an acoustic matching body, which comprises:
gelating a bubble-containing ceramic slurry containing at least one kind of hardly-sinterable ceramic powder within a mold to obtain a gel porous molded body;
drying and degreasing the gel porous molded body; and
sintering the gel porous molded body,
**characterized in that**
the pores of the porous molded boby have a size such that a center value of pore diameter distribution is within a range of 100 µm to 500 µm.

9. A method for producing an acoustic matching body, which comprises:
forming a first porous body by a method according to claim 8, and
forming a second porous body within the one or more concavities by a method including:
placing the first porous body in a second mold;
charging a starting material solution for the second porous body in the second mold to impregnate the first porous body with the staring material solution; and
solidifying the staring material solution.

10. The method for producing an acoustic matching body according to claim 9, wherein the first porous body is placed within the second mold so that the one or more concavities face a bottom of the second mold.

11. The acoustic matching body according to claim 9 wherein, in the formation of the first porous body, the gel porous molded body formed within the first mold is dried while the first mold is opened on at least one surface of a side surface, a top surface and a lower surface of the gel porous molded body.

12. The method for producing an acoustic matching body according to claim 11, wherein the first mold is opened by sliding a mold wall of the first mold.

13. The method for producing an acoustic matching body according to claim 9, wherein, in the formation of the first porous body, the one or more concavities are formed after casting the bubble-containing ceramic slurry into the first mold.

14. The method for producing an acoustic matching body according to claim 9, wherein, in the formation of the first porous body, a mold in which a portion which contacts with at least one surface of the gel porous molded body is formed from a resin is used as the first mold.

15. The method for producing an acoustic matching body according to claim 9, wherein, in the formation of the first porous body, a mold in which a portion which contacts with at least one surface of the gel porous molded body is formed from a metal is used as the first mold.

16. An ultrasonic sensor which comprises a piezoelectric material and an acoustic matching layer wherein the acoustic matching layer is formed' from the acoustic matching body according to claim 1 or claim 3.

17. An ultrasonic sending/transmitting system which comprises the ultrasonic sensor according to claim 16.

## Patentansprüche

1. Akustischer Anpassungskörper, enthaltend einen keramischen porösen Körper, der keramische Partikel umfasst, die eine keramische Matrix bilden, wobei:
die keramische Matrix eine Mehrzahl von Poren definiert, und
Inter-Keramikpartikel-Zwischenräume in der keramischen Matrix gebildet sind,
**dadurch gekennzeichnet, dass**
die Poren eine Größe aufweisen, so dass ein Zentralwert der Porendurchmesserverteilung im Bereich zwischen 100 µm und 500 µm liegt.

2. Akustischer Anpassungskörper nach Anspruch 1, wobei der keramische poröse Körper eine Oberflächenschicht und eine innere Schicht, die mit der Oberflächenschicht durchgängig ausgebildet ist, aufweist, und wobei eine Dichte der Oberflächenschicht größer als eine Dichte der inneren Schicht ist.

3. Akustischer Anpassungskörper nach Anspruch 1, weiter umfassend einen zweiten porösen Körper, wobei:
der zweite poröse Körper ein poröser Körper ist, der eine geringere Dichte und eine niedrigere akustische Geschwindigkeit als eine Dichte und akustische Geschwindigkeit des keramischen porösen Körpers aufweist.

4. Akustischer Anpassungskörper nach Anspruch 3, wobei der zweite poröse Körper ein getrocknetes anorganisches Oxid-Gel ist.

5. Akustischer Anpassungskörper nach Anspruch 3, wobei ein Teil der Außenfläche des zweiten porösen Körpers von dem keramischen porösen Körper umgeben ist.

6. Akustischer Anpassungskörper nach Anspruch 4, wobei ein Teil oder alle Poren und die Inter-Keramikpartikel-Zwischenräume mit dem zweiten porösen Körper gefüllt sind.

7. Akustischer Anpassungskörper nach Anspruch 1 oder 3, wobei die keramische Matrix eine schwer sinterbare Keramik umfasst.

8. Verfahren zur Herstellung eines akustischen Anpassungskörpers, das aufweist:
Gelieren eines Blasen enthaltenden, keramischen Schlamms in einer Form, um einen gelförmigen, porösen Formkörper zu erhalten, wobei der keramische Schlamm mindestens eine Art eines schwer sinterbaren Keramikpulvers enthält;
Trocknen und Entfetten des gelförmigen, porösen Formkörpers; und
Sintern des gelförmigen, porösen Formkörpers,
**dadurch gekennzeichnet, dass**
die Poren des porösen Formkörpers eine Größe aufweisen, so dass ein Zentralwert der Porendurchmesserverteilung im Bereich zwischen 100 µm und 500 µm liegt.

9. Verfahren zur Herstellung eines akustischen Anpassungskörpers, das aufweist:
Bilden eines ersten porösen Körpers durch ein Verfahren nach Anspruch 8, und
Bilden eines zweiten porösen Körpers innerhalb einer oder mehrerer Höhlungen durch ein Verfahren, umfassend:
Anordnen des ersten porösen Körpers in einer zweiten Form;
Füllen der zweiten Form mit einer Ausgangslösung für den zweiten
porösen Körper, um den ersten porösen Körper mit der Ausgangslösung zu beschichten; und
Verfestigen der Ausgangslösung.

10. Verfahren zur Herstellung eines akustischen Anpassungskörpers nach Anspruch 9, wobei der erste poröse Körper derart innerhalb der zweiten Form angeordnet wird, dass die eine oder die mehreren Höhlungen einem Boden der zweiten Form zugewandt sind.

11. Verfahren zur Herstellung eines akustischen Anpassungskörpers nach Anspruch 9, wobei bei der Bildung des ersten porösen Körpers der gelförmige, poröse Formkörper, der innerhalb der ersten Form geformt wird, an mindestens einer Oberfläche, einer Seitenoberfläche, Oberseitenoberfläche und Unterseitenoberfläche getrocknet wird, während die Form geöffnet ist.

12. Verfahren zur Herstellung eines akustischen Anpassungskörpers nach Anspruch 11, wobei die erste Form durch Verschieben einer Formwand der ersten Form geöffnet wird.

13. Verfahren zur Herstellung eines akustischen Anpassungskörpers nach Anspruch 9, wobei bei der Bildung des ersten porösen Körpers die eine oder die mehreren Höhlungen nach dem Gießen des Blasen enthaltenden, keramischen Schlamm in die erste Form gebildet werden.

14. Verfahren zur Herstellung eines akustischen Anpassungskörpers nach Anspruch 9, wobei bei der Bildung des ersten porösen Körpers eine Form, bei der ein Bereich, der mindestens eine Oberfläche des gelförmigen porösen Körpers berührt, aus einem Harz gebildet ist, als erste Form verwendet wird.

15. Verfahren zur Herstellung eines akustischen Anpassungskörpers nach Anspruch 9, wobei bei der Bildung des ersten porösen Körpers eine Form, bei der ein Bereich, der mindestens eine Oberfläche des gelförmigen porösen Körpers berührt, aus einem Metall gebildet ist, als erste Form verwendet wird.

16. Ultraschallsensor, der ein piezoelektronisches Material und eine akustische Anpassungsschicht enthält, wobei die akustische Anpassungsschicht aus einem akustischen Anpassungskörper nach Anspruch 1 oder 3 gebildet ist.

17. Ultraschallsende-/Ultraschallübertragungssystem, umfassend einen Ultraschallsensor nach Anspruch 16.

## Revendications

1. Corps d'adaptation acoustique comprenant un corps poreux en céramique, qui comprend des particules de céramique constituant une matrice de céramique, dans lequel :
la matrice de céramique définit une pluralité de pores et
des vides entre les particules de céramique sont formés dans la matrice de céramique,
**caractérisé en ce que**
les pores ont une dimension telle qu'une valeur centrale de la répartition du diamètre de pore est comprise dans une plage allant de 100 µm à 500 µm.

2. Corps d'adaptation acoustique suivant la revendication 1, dans lequel le corps poreux en céramique a une couche de surface et une couche intérieure, qui a de la continuité avec la couche de surface, et une masse volumique de la couche de surface est plus grande qu'une masse volumique de la couche intérieure.

3. Corps d'adaptation acoustique suivant la revendication 1, comprenant en outre un deuxième corps poreux, dans lequel :
le deuxième corps poreux est un corps poreux qui a une masse volumique plus petite et une vitesse sonique plus petite qu'une masse volumique et une vitesse sonique du corps poreux en céramique.

4. Corps d'adaptation acoustique suivant la revendication 3, dans lequel le deuxième corps poreux est un gel séché d'oxyde minéral.

5. Corps d'adaptation acoustique suivant la revendication 3, dans lequel une partie périphérique du deuxième corps poreux est entourée du corps en céramique.

6. Corps d'adaptation acoustique suivant la revendication 4, dans lequel tout ou partie des pores et des vides entre les particules de céramique sont emplis du deuxième corps poreux.

7. Corps d'adaptation acoustique suivant la revendication 1 ou 3, dans lequel la matrice de céramique comprend des produits en céramique durs à fritter.

8. Procédé de production d'un corps d'adaptation acoustique, dans lequel :
on prend en gel une barbotine de céramique, contenant des bulles et contenant au moins un type de poudre de céramique dure à fritter, dans un moule, pour obtenir un corps moulé poreux de gel ;
on sèche et on dégraisse le corps moulé poreux de gel et
on fritte le corps moulé poreux de gel,
**caractérisé**
**en ce que** les pores du corps moulé poreux ont une dimension telle qu'une valeur centrale de la répartition de diamètre de pore est comprise dans une plage allant de 100 µm à 500 µm.

9. Procédé de production d'un corps d'adaptation acoustique, dans lequel :
on forme un premier corps poreux par un procédé suivant la revendication 8 et
on forme un deuxième corps poreux ayant une ou plusieurs concavités, par un procédé dans lequel :
on place le premier corps poreux dans un deuxième moule ;
on charge une solution de matière de départ pour le deuxième corps poreux, dans le deuxième moule, pour imprégner le premier corps poreux de la solution de matière de départ et
on solidifie la solution de matière de départ.

10. Procédé de production d'un corps d'adaptation acoustique suivant la revendication 9, dans lequel on place le premier corps poreux dans le deuxième moule, de manière à ce que la une ou les plusieurs concavités soient en face d'un fond du deuxième moule.

11. Corps d'adaptation acoustique suivant la revendication 9, dans lequel, dans la formation du premier corps poreux, on sèche le corps moulé poreux de gel formé dans le premier moule, tandis que le premier moule est ouvert sur au moins une surface d'une surface latérale, d'une surface de sommet et d'une surface inférieure du corps moulé poreux de gel.

12. Procédé de production d'un corps d'adaptation acoustique suivant la revendication 11, dans lequel on ouvre le premier moule en faisant glisser une paroi du premier moule.

13. Procédé de production d'un corps d'adaptation acoustique suivant la revendication 9, dans lequel, dans la formation du premier corps poreux, on forme la concavité ou les plusieurs concavités après coulée de la barbotine de céramique contenant des bulles dans le premier moule.

14. Procédé de production d'un corps d'adaptation acoustique suivant la revendication 9, dans lequel, dans la formation du premier corps poreux, on utilise, comme premier moule, un moule dans lequel une partie, qui est en contact avec au moins une surface du corps moulé poreux de gel, est en une résine.

15. Procédé de production d'un corps d'adaptation acoustique suivant la revendication 9, dans lequel, dans la formation du premier corps poreux, on utilise, comme premier moule, un moule dans lequel une partie, qui est en contact avec au moins une surface du corps moulé poreux de gel, est en un métal.

16. Capteur d'ultrasons, qui comprend un matériau piézoélectrique et une couche d'adaptation acoustique, dans lequel la couche d'adaptation acoustique est formée à partir du corps d'adaptation acoustique suivant la revendication 1 ou suivant la revendication 3.

17. Système d'émission/transmission d'ultrasons, qui comprend le capteur d'ultrasons suivant la revendication 16.
